# EUROPÄISCHE PATENTSCHRIFT

(11) **EP 0 681 994 B1**
(45) Veröffentlichungstag und Bekanntmachung des Hinweises auf die Patenterteilung: **26.01.2000**
(21) Anmeldenummer: 95105159.8
(22) Anmeldetag: 06.04.1995
(51) Int. Cl.: C02F 1/50, B01D 39/08, B01D 39/12, B01D 39/10

(54) **Keimschutz für Hauswasserfilter-Siebeinsätze**
Germ barrier for a sieve filter in a household water filter
Barrière à germe pour un filtre à tamis d'un filtre à eau pour usage domestique

(30) Priorität: 10.05.1994 DE 4416501
(43) Veröffentlichungstag der Anmeldung: 15.11.1995
(73) Patentinhaber: Judo Wasseraufbereitung GmbH, D-71364 Winnenden (DE)
(72) Erfinder: Söcknick, Ralf, Dr., 70806 Kornwestheim (DE)
(74) Vertreter: KOHLER SCHMID + PARTNER

(56) Entgegenhaltungen:
- DE-A- 2 258 906
- DE-A- 3 905 164
- PATENT ABSTRACTS OF JAPAN vol. 016 no. 425 (C-0982) ,7.September 1992 & JP-A-04 145910 (MATSUSHITA ELECTRIC IND CO LTD) 19.Mai 1992,

## Beschreibung

Die Erfindung betrifft ein Wasserfilter mit Siebfiltereinsatz zur Oberflächenfiltration mit Durchlaßweiten von 50-200 µm zum Ausfiltern kleiner Feststoffpartikel aus zu behandelndem Trinkwasser.

Derartige Wasserfilter sind beispielsweise aus dem Firmenprospekt "Maßgebend in der Wasseraufbereitung" der Firma JUDO Wasseraufbereitung GmbH aus dem Jahre 1993, Seiten 18 bis 21 und 29 sowie der "JUDO-Preisliste 94", Seiten 1.1 - 1.7 bekannt.

Gelegentlich werden mit dem Trinkwasser kleine Feststoffpartikel wie z.B. Rostteilchen und Sandkörner, in die Hausinstallation eingespült. Diese Partikel können fremdstoffinduzierte Korrosionsschäden in Form von Mulden- und Lochfraß in den Rohrleitungen bewirken, im Laufe der Zeit Brauseköpfe bzw. Luftsprudler verstopfen oder die Funktion von Armaturen stören. Filter verhindern, wenn sie geeignete Durchlaßweiten nach DIN 19632 aufweisen, solche Erscheinungen weitgehend.

Die Siebfiltereinsätze haben nach DIN 19632 eine untere Durchlaßweite von 80-120 µm und eine obere Durchlaßweite von 100-160 µm. Die untere Durchlaßweite ist die Korngröße eines Materials in µm, das unter Prüfbedingungen mit einem Massenanteil von 90 % den Filter durchläuft. Die obere Durchlaßweite ist die Korngröße eines Materials in µm, das mit einem Massenanteil von 10 % den Filter durchläuft. Derartige grobmaschige Siebe dienen zur Ausfiltration der oben beschriebenen, mit dem Leitungswasser mitgeführten Partikel.

Nach DIN 1988 ist daher bei metallenen Leitungen unmittelbar nach der Wasserzähleranlage ein Filter entsprechend DIN 19632 in die Trinkwasseranlage einzubauen. Diese Filter haben Siebfiltereinsätze aus Kunststoff, Metall oder Keramik usw. in Form von z.B. Strümpfen, Hülsen oder Kerzen. Bekannt sind Siebgewebe, Spaltensiebe oder Vliesstoffsiebe.

Den verschiedenen Siebfiltereinsätzen ist gemein, daß sie eine Oberflächenfiltration bewirken. Diese Oberflächenfiltration führt in Abhängigkeit von der Betriebszeit zum Aufbau eines Filterkuchens. Dieser Filterkuchen kann unter ungünstigen Betriebsbedingungen neben anorganischen Partikeln mit zunehmender Porenfeinheit des Filterkuchens auch Mikroorganismen aus dem Wasser herausfiltern. Um einer Verkeimung des Filters vorzubeugen, sollen daher rückspülbare Filter regelmäßig (nach DIN 1988 alle 2 Monate) rückgespült werden. Hierdurch wird der Filterkuchen entfernt und der Filtereinsatz gereinigt. Bei nicht rückspülbaren Filtern müssen die Filtereinsätze (entsprechend DIN 1988) spätestens nach 6 Monaten durch neue ersetzt werden. Dennoch kann in der Zwischenzeit abhängig von den jeweiligen Umgebungsbedingungen bereits ein trägerfixiertes biologisches Wachstum von Mikroorganismen am Filter stattgefunden haben.

Aufgabe der vorliegenden Erfindung ist es daher, ein Wasserfilter der eingangs beschriebenen Art vorzustellen, mit dem Feststoffpartikel einer bestimmten Größe aus Trinkwasser ausgefiltert werden können und bei dem die Hygiene beim Betrieb des Siebfiltereinsatzes auf einfache und preisgünstige Weise deutlich gesteigert wird.

Erfindungsgemäß wird diese Aufgabe dadurch gelöst, daß die gesamte Oberfläche der das Siebfilter bildenden Werkstoffe, also die Kett- und Schußfäden eines Siebgewebes oder die Fasern eines Vliesstoffsiebes mit einer durch galvanische Abscheidung oder Bedampfung aufgebrachten fest haftenden, in Wasser schwer löslichen Beschichtung aus Schwermetall mit keimtötender Wirkung versehen ist, die sich langsam im Wasser auflöst.

Durch den für Mikroorganismen giftigen, also keimtötenden Überzug auf der gesamten Oberfläche des Siebfiltereinsatzes wird ein trägerfixiertes Wachstum von Keimen wirksam verhindert. Es wird vermieden, daß sich die unerwünschten Keime an einigen nicht beschichteten Stellen ansiedeln und dort Wachstumskolonien bilden können. Die Beschichtung kann entweder nachträglich auf das Siebfilter aufgebracht werden oder bereits auf den Ausgangsmaterialien, also beispielsweise den Kett- und Schußfäden oder Fasern, vorhanden sein. Letztere Variante ermöglicht eine preisgünstigere Herstellung des erfindungsgemäßen Wasserfilters.

Ein Verfahren zur Herstellung von Siebgeweben mit einer definierten und stabilen Maschenweite ist z.B. aus der DE-A-2 258 906 an sich bekannt.

In der EP 0 150 559 A2 ist demgegenüber ein Wasseraufbereitungsgerät beschrieben, bei dem in einem Gehäuse ein Vorfilter zur Entfernung größerer Partikel aus dem Strom des zu behandelnden Wassers, danach ein Aktivkohlefilter mit einer Porengröße in der Größenordnung von 50 µm zum Ausfiltrieren von Geruchs- und Geschmacksstoffen und schließlich ein Keramikfilter mit einer Porenweite von 5 µm zur Ausfiltration von Keimen aus dem zu behandelnden Wasser vorgesehen sind. Lediglich das Vorfilter ist vergleichbar mit dem Siebfiltereinsatz zur Oberflächenfiltration in einem gattungsgemäßen Wasserfilter. Das nachgeschaltete Aktivkohlefilter hat bereits eine beträchtlich geringere Porenweite als das Vorfilter und dient als eine Art chemisches Adhäsivfilter, durch das Verunreinigungen im Wasser an die inneren Oberflächen der Aktivkohle angebunden werden. Zur mechanischen Filtration, also dem Ausfiltern kleiner Feststoffpartikel aus dem zu behandelnden Trinkwasser dient hingegen das vorgeschaltete Vorfilter. Das dem Aktivkohlefilter als drittes Filter nachgeschaltete Keramikfilter mit seiner äußerst kleinen Porenweite wirkt ähnlich einer Umkehrosmosemembran zum Ausfiltrieren von Bakterien und anderen Keimen und ist mit einem Siebfiltereinsatz zur Oberflächenfiltration mit Maschenweite in der Größenordnung von 100 µm absolut nicht vergleichbar, da hier eine völlig andere Technologie zu völlig anderen technischen Zwecken eingesetzt wird. Insbesondere sind die technische Handhabung und die bei der Herstellung und beim Betrieb derartiger Keramikfilter auftretenden technischen Probleme völlig anders als dies bei grobmaschigen Siebfiltereinsätzen für Oberflächenfiltration der Fall ist.

Lediglich in Zusammenhang mit dem Keramikfilter ist in der EP 0 150 559 A2 eine Beschichtung mit einem silberhaltigen oder anderen bakteriostatischen Stoff beschrieben. Insbesondere die Wirkung der näher beschriebenen Silbernitratbeschichtung des Keramikfilters ist eine völlig andere als die oben vorgestellte erfindungsgemäße Beschichtung. Während bei dem silbernitratbeschichteten Keramikfilter diejenigen Keime, die das Keramikfilter passiert haben, auf der Produktwasserseite durch aufgelöstes Silbernitrat doch noch abgetötet werden, soll die keimtötende Wirkung der Beschichtung des Siebfiltereinsatzes gemäß der vorliegenden Erfindung lediglich in der lokalen Umgebung des Oberflächenfilters ein Ansammeln von Keimen (Bakterienschleim) über eine längere Betriebsdauer an der Oberfläche des Siebfiltereinsatzes verhindern. Schon wegen der völlig unterschiedlichen Reichweiten der keimtötenden Wirkung sind die beiden einander gegenüberstehenden Techniken daher nicht vergleichbar.

Aus den Patent Abstracts of Japan, Bd. 16, Nummer 425 (C-0982), 07.09.1992, ist ein sterilisierendes Filter bekannt, das aus einer porösen keramischen Platte besteht, jedoch keinen Siebfiltereinsatz aufweist. Die Keramikplatte besitzt Poren mit Durchmessern zwischen 50 und 170 µm. Das Rohwasser muß jedoch bei dieser Anordnung nicht durch die Keramikplatte hindurchströmen, sondern kann die Platte auch seitlich umgehen. Die Oberfläche der Keramikplatte ist mit Silberchlorid beschichtet.

Die Funktion der Keramikplatte besteht also in einer Reduzierung und Vergleichmäßigung des Rohwasservolumenstromes sowie in der Abgabe von Silberchlorid zur Desinfektion des Rohwassers, bevor dieses mit einem nachgeschalteten granularen Filtermedium, also einem dreidimensionalen Tiefenfilter, in Kontakt kommt. Insbesondere soll mit der bekannten Vorrichtung das hindurchströmende und das seitlich vorbeiströmende Wasser selbst desinfiziert werden, während mit dem erfindungsgemäßen Wasserfilter mit Siebfiltereinsatz zur Oberflächenfiltration ein trägerfixiertes Bakterienwachstum auf einem Oberflächenfilter verhindert werden soll. Letzteres kann und soll die poröse keramische Platte gemäß der bekannten Anordnung keineswegs leisten.

Aus der DE 39 05 164 A1 ist ein Keimfilter für Wasser und flüssige Nahrungsmittel bekannt, welches Silber enthält und bei dem die Gefahr einer unzulässigen Anreicherung des Wassers bzw. des flüssigen Nahrungsmittels mit Silber nicht besteht. Dies soll dadurch erreicht werden, daß der Keimfilter mindestens ein metallisches Gittergewebe mit einer harten Silberbeschichtung mit einer oligodynamischen Wirkung zum Einbau in Rohrleitungen und Filteranlagen aufweist. Bei der bekannten Anordnung werden mehrere Gittergewebe mit unterschiedlichen Maschenweiten hintereinander geschaltet, und zwar so, daß die Maschenweiten in Strömungsrichtung der Flüssigkeit ansteigen. Damit handelt es sich bei der bekannten Vorrichtung nicht um einen Siebfilter zur Oberflächenfiltration von Feststoffpartikeln. Das Ziel der bekannten Vorrichtung ist vielmehr, durch die unterschiedlichen Maschenweiten bzw. die versetzte Anordnung mehrerer hintereinander angeordneter Gittergewebe eine Verwirbelung der Flüssigkeit im Keimfilter zu bewirken und dementsprechend den Kontakt zwischen der durchströmenden Flüssigkeit und der silberbeschichteten Gittergewebeoberfläche zu intensivieren.

Die US-PS 5,164,085 beschreibt eine Wasserfilterpatrone zur Aufbereitung von Wasser, die bezüglich des Wasserfilters gemäß der vorliegenden Erfindung ebenfalls gattungsfremd ist. Die bekannte Filterpatrone enthält ebenso wie das Gerät aus der EP 0 150 559 A2 einen dreistufigen Filtereinsatz mit einem mechanischen Vorfilter, einem diesem nachgeschalteten Aktivkohle-Adhäsivfilter sowie einem dem letzteren nachgeschalteten Keramikfilter. Bereits das Vorfilter in der US-PS 5,164,085 hat eine Porengröße von lediglich etwa 10 µm, das Aktivkohle-Adhäsivfilter eine Porengröße von etwa 5 µm und das Keramikfilter eine Porengröße von lediglich etwa 0,9 µm. Damit liegen sämtliche verwendeten Filtermaterialien allein schon aufgrund der Filtermaschenweite in einem völlig anderen Bereich als die Siebfiltereinsätze zur Oberflächenfiltration gemäß der vorliegenden Erfindung. Ähnlich wie bei dem Gerät nach der EP 0 150 559 A2 ist auch bei dem Wasseraufbereitungsgerät nach der US-PS 5,164,085 eine Silberimprägnierung lediglich auf dem letzten, feinstporigsten Filtereinsatz, der aufgrund seiner Porenweite Bakterien abscheidet, nämlich dem Keramikfilter zur Verhinderung eines Aufbaus von Bakterienschleim vorgesehen, und kann daher keine Anregung zur Verbesserung eines Wasserfilters mit grobmaschigen Siebfiltereinsatz zur mechanischen Oberflächenfiltration zum Ausfiltern kleiner Feststoffpartikel geben.

Bei dem erfindungsgemäßen Wasserfilter löst sich die keimtötende Beschichtung langsam in Wasser auf.

Zum einen können sich auf der keimtötenden Filtereinsatzoberfläche keine Keime ansiedeln, zum anderen führt die sich langsam auflösende keimtötende Beschichtung in der Umgebung der Filtereinsatzoberfläche - also auch im anhaftenden dünnen Filterkuchen - zu sehr ungünstigen Lebensbedingungen für Keime. Der Filterkuchen hat in der Regel eine Dicke von weniger als 1 mm.

Die keimtötende Beschichtung des erfindungsgemäßen Wasserfilters besteht aus Schwermetall. Das Metall kann galvanisch auf den Metalldrähten eines Filtergewebes abgeschieden oder durch Bedampfung auf jeder beliebigen, im wesentlichen zweidimensionalen Filtereinsatzoberfläche aufgebracht werden.

Besonders bevorzugt ist eine Ausführungsform des erfindungsgemäßen Wasserfilters, bei der die Beschichtung aus Silber besteht.

Die Verwendung von Silber zu Desinfektionszwecken ist an sich nicht neu. Bei Ionenaustauscheranlagen ist der Einsatz von sogenanntem Silberharz seit langem bekannt.

Beispielsweise ist in der DE 32 48 126 C3 ein vom Wasserleitungsnetz unabhängiges Gerät zur Verbesserung der Qualität von Trinkwasser beschrieben, bei dem in einem Gehäuse eine auswechselbar darin aufgenommene Patrone vorgesehen ist, die einen Ionenaustauscher sowie einen zumindest bakteriostatisch wirkenden Stoff wie Silber in disoziierbarer Form enthält.

Dieses Silberharz gibt über einen großen Zeitraum (mehrere Jahre) Silberionen im Ionenaustauscherharzbett ab und führt somit zu einer sozusagen dreidimensionalen Desinfektionswirkung im für Keime als Tiefenfilter wirksamen Harzbett. Diese Technik ist jedoch nur sehr begrenzt wirksam, da die keimtötende Wirkung des Silbers aufgrund des räumlichen Abstandes zwischen Silberharz und Keimen naturgemäß nie 100 % der Keime erreichen kann. Es werden ca. 2% Silberharz eingesetzt, so daß z.B. bei nicht vollständig homogener Mischung des Silberharzes mit dem Ionenaustauscherharz Abstände zwischen Silberharz und Keimen von ca. 5-20 mm auftreten können. Diese Keime werden beim (Rück)spülen des Harzbettes auch nur unvollständig ausgespült. Es bleiben also Keime im Harzbett, die sich im Laufe der Jahre an das Silber gewöhnen und somit derartig resistent werden, daß sie das gesamte Harzbett besiedeln können - trotz des Silberharzes.

Bei einem mit Silber beschichteten Siebfiltereinsatz für die Oberflächenfiltration sind die Verhältnisse naturgemäß anders:

Bei einem nicht rückspülbaren Filter wird der komplette Filtereinsatz und mit ihm ein eventuell gebildeter Filterkuchen nach einigen Monaten ausgebaut und verworfen - so kann der beim Ionenaustauscher beobachtete Gewöhnungseffekt hier nicht auftreten.

Bei einem rückspülbaren Filter wird der Filterkuchen von der Filtereinsatzoberfläche abgereinigt und gelangt in den Abwasserkanal. Eventuelle auf der Filtereinsatzoberfläche verbleibende dünne Filterkuchen-Restschichten haben mit der keimtötenden Silberoberfläche des Filtereinsatzes direkt Kontakt und werden daher vollständig abgetötet. Auch hier kann daher kein Gewöhnungseffekt auftreten.

Bei einer vorteilhaften Weiterbildung der zuletzt genannten Ausführungsform des erfindungsgemäßen Wasserfilters umfaßt der Siebfiltereinsatz ein mit Silber beschichtetes Siebgewebe aus Edelstahldraht. Ein solches Gewebe ist besonders stabil und weist eine definierte Maschenweite auf.

Zur Überprüfung der Vollständigkeit der sich langsam auflösenden Metall-Beschichtung kann bei einer weiteren Ausführungsform eine Referenzelektrode vorgesehen sein, mit deren Hilfe die Vollständigkeit der flächigen Beschichtung über das Elektrodenpotential ständig beobachtet werden kann.

Besonders bevorzugt ist eine Weiterbildung dieser Ausführungsform, bei der die Referenzelektrode aus Silber ist, und bei der durch Anlegen eines elektrischen Stromes, welcher die Referenzelektrode als Anode auflöst und das Silber auf der Sieboberfläche (= Kathode) galvanisch wieder abscheidet, die keimtötende Beschichtung regeneriert werden kann, wenn sie sich schon teilweise aufgelöst hat. Auf diese Weise kann die Lebensdauer des erfindungsgemäßen Siebfiltereinsatzes quasi beliebig verlängert werden.

In den Rahmen der Erfindung fällt auch ein Verfahren zum Betrieb eines erfindungsgemäßen rückspülbaren Wasserfilters der oben beschriebenen Art, das sich dadurch auszeichnet, daß der sich auf dem Filter ansammelnde Filterkuchen durch Rückspülen von der Oberfläche des Siebfiltereinsatzes abgereinigt wird.

Alternativ dazu ist ein Verfahren zum Betrieb eines erfindungsgemäßen nicht-rückspülbaren Wasserfilters, bei dem der komplette Siebfiltereinsatz nach einigen Monaten des Betriebs ausgebaut und zusammen mit einem eventuell gebildeten Filterkuchen verworfen wird.

Weitere Vorteile der Erfindung ergeben sich aus der nachfolgenden Beschreibung von speziellen Ausführungsbeispielen. Ebenso können die vorstehend genannten und die noch weiter ausgeführten Merkmale erfindungsgemäß jeweils einzeln für sich oder zu mehreren in beliebigen Kombinationen Verwendung finden. Die beschriebenen Ausführungsformen sind nicht als abschließende Aufzählung zu verstehen, sondern haben vielmehr beispielhaften Charakter.

### Beispiel 1:

Die gesamte Oberfläche der das Siebfilter bildenden Werkstoffe wird mit einem keimtötenden Material beschichtet. So z.B. die Kett- und Schußfäden eines Siebgewebes aus Metall (z.B. Edelstahl, Kupfer etc.) oder Kunststoff bzw. die Fasern eines Vliesstoffsiebes.

### Beispiel 2:

Besonders bevorzugt wird als keimtötende Beschichtung Silber verwendet.

### Beispiel 3:

Besonders vorteilhaft sind Filtereinsätze aus Edelstahlgewebe, die mit Silber beschichtet sind.

### Beispiel 4:

Da sich die Silberbeschichtung durch das In-Lösung-gehen des Silbers in Form von Silberionen langsam "verbraucht", ist es besonders vorteilhaft, wenn man die Vollständigkeit der Beschichtung überprüfen kann. Insbesondere, wenn die Beschichtung auf einem metallenen Siebfilterwerkstoff aufgebracht wurde, ist dies über das Elektrodenpotential mit Hilfe einer Referenzelektrode möglich. So kann eine Silberbeschichtung mit Hilfe einer Referenzelektrode z.B. aus Edelstahl überprüft werden. Entsprechende Meßkontakte können an die Außenseite des Filtergehäuses geführt werden. Gemessen wird der Potentialunterschied zwischen der Silberoberfläche und der Referenzelektrode. Der Elektrolyt ist das Wasser im Filtergehäuse. Ist die Gegenelektrode aus Edelstahl und hat sich die Beschichtung größtenteils aufgelöst, so geht das gemessene Potential gegen Null. Der Siebeinsatz muß gegen einen neuen (mit intakter Beschichtung) ausgetauscht werden.

### Beispiel 5:

Noch vorteilhafter wird die Referenzelektrode aus Silber hergestellt. Bei intakter Beschichtung wird zunächst keine Potentialdifferenz gemessen. Diese steigt jedoch mit zunehmender Auflösung der Beschichtung. Wird ein bestimmtes Maximalpotential erreicht, dann muß die Beschichtung "regeneriert", d.h. erneuert werden. Dies geschieht beispielsweise durch Anlegen eines elektrischen Stromes, welcher die Referenzelektrode aus z.B. Silberdraht als Anode auflöst und das Silber auf der Siebfilteroberfläche (= Kathode) abscheidet.

## Patentansprüche

1. Wasserfilter mit Siebfiltereinsatz zur Oberflächenfiltration mit Durchlaßweiten von 50-200 µm, vorzugsweise zwischen 80 und 160 µm zum Ausfiltern kleiner Feststoffpartikel aus zu behandelndem Trinkwasser,
dadurch gekennzeichnet,
daß die gesamte Oberfläche der das Siebfilter bildenden Werkstoffe, also die Kett- und Schußfäden eines Siebgewebes oder die Fasern eines Vliesstoffsiebes mit einer durch galvanische Abscheidung oder Bedampfung aufgebrachten, fest haftenden, in Wasser schwer löslichen Beschichtung aus Schwermetall mit keimtötender Wirkung versehen ist, die sich langsam im Wasser auflöst.

2. Wasserfilter nach Anspruch 1, dadurch gekennzeichnet, daß die Beschichtung aus Silber besteht.

3. Wasserfilter nach einem der vorhergehenden Ansprüche, dadurch gekennzeichnet, daß der Siebfiltereinsatz ein mit Silber beschichtetes Siebgewebe aus Edelstahldraht umfaßt.

4. Wasserfilter nach den Ansprüchen 2 oder 3, dadurch gekennzeichnet, daß eine Referenzelektrode vorgesehen ist, mit deren Hilfe die Vollständigkeit der sich langsam auflösenden Beschichtung über das Elektrodenpotential überprüft werden kann.

5. Wasserfilter nach Anspruch 4, dadurch gekennzeichnet, daß die Referenzelektrode aus Silber ist, und daß durch Anlegen eines elektrischen Stromes, welcher die Referenzelektrode als Anode auflöst und das Silber auf der Siebfilteroberfläche (= Kathode) galvanisch wieder abscheidet, die Beschichtung, wenn sie sich schon teilweise aufgelöst hat, regeneriert werden kann.

6. Verfahren zum Betrieb eines Wasserfilters nach einem der vorhergehenden Ansprüche, dadurch gekennzeichnet, daß der sich auf dem Filter ansammelnde Filterkuchen durch Rückspülen von der Oberfläche des Siebfiltereinsatzes abgereinigt wird.

7. Verfahren zum Betrieb eines nicht-rückspülbaren Wasserfilters nach einem der Ansprüche 1 bis 5, dadurch gekennzeichnet, daß der komplette Siebfiltereinsatz nach einigen Monaten des Betriebs ausgebaut und zusammen mit einem eventuell gebildeten Filterkuchen verworfen wird.

## Claims

1. Water filter with a filtering screen insert for surface filtration, with widths of passage of between 50 and 200µm, preferably between 80 and 160µm, for extracting small solid particles from drinking water to be treated through filtering, characterized in that the entire surface of the materials forming the filtering screen, i.e. the warp and weft threads of a filter cloth or the fibers of a filter of a non-woven fabric, is provided with a coating of heavy metal, disposed by galvanic segregation or vapor-deposition, which has strong adhesive properties and is hardly soluble in water, and which has antiseptic properties and dissolves slowly in water.

2. Water filter according to claim 1, characterized in that the coating consists of silver.

3. Water filter according to one of the preceding claims, characterized in that the filtering screen insert comprises a filter cloth of special steel wire coated with silver.

4. Water filter according to claims 2 or 3, characterized in that a reference electrode is provided by means of which the completeness of the slowly dissolving coating can be checked by means of the electrode potential.

5. Water filter according to claim 4, characterized in that the reference electrode consists of silver and that the coating, in case it has partly dissolved already, can be regenerated through application of an electric current which dissolves the reference electrode as anode and disposes galvanically the silver again from the surface of the filtering screen (=cathode).

6. Method of operating a water filter according to one of the preceding claims, characterized in that the filter cake accumulating on the filter is cleansed from the surface of the filtering screen insert through back-purging.

7. Method of operating a water filter which cannot be back-purged, according to one of claims 1 to 5, characterized in that the whole filtering screen insert is removed after a few months of operation and is rejected together with a filter cake that might have formed.

## Revendications

1. Filtre à eau comprenant un insert filtrant pour la filtration de surface, avec des ouvertures de passage de 50 à 200 microns, de préférence entre 80 et 160 microns pour supprimer par filtrage des petites particules de matières solides hors de l'eau potable à traiter,
caractérisé en ce que
la totalité de la surface des matériaux constituant le filtre, donc les fils de chaîne et de trame d'un tissu de tamis, ou les fibres d'un tamis en nappe, est pourvue d'un revêtement de métal lourd avec effet destructeur vis-à-vis des germes, appliqué par déposition galvanique, ou par vaporisation, ledit revêtement présentant une bonne adhérence et étant difficilement soluble dans l'eau, ce revêtement étant lentement dissous dans l'eau.

2. Filtre à eau selon la revendication 1, caractérisé en ce que le revêtement est en argent.

3. Filtre à eau selon l'une des revendications précédentes, caractérisé en ce que l'insert filtrant comprend un tissu de tamis en fil d'acier inoxydable, revêtu avec de l'argent.

4. Filtre à eau selon l'une ou l'autre des revendications 2 et 3, caractérisé en ce que l'on prévoit une électrode de référence, à l'aide de laquelle on peut vérifier le caractère complet du revêtement qui se dissout lentement, au moyen du potentiel d'électrode.

5. Filtre à eau selon la revendication 4, caractérisé en ce que l'électrode de référence est en argent, et en ce qu'en appliquant un courant électrique, qui provoque la dissolution de l'électrode de référence à titre d'anode, et qui provoque à nouveau la déposition par voie galvanique de l'argent sur la surface du filtre (c'est-à-dire à titre de cathode), on peut régénérer le revêtement lorsque celui-ci s'est déjà partiellement dissous.

6. Procédé pour le fonctionnement d'un filtre à eau selon l'une des revendications précédentes, caractérisé en ce que le gâteau de filtre qui s'est accumulé sur le filtre est nettoyé de la surface de l'insert filtrant par contre-rinçage.

7. Procédé pour le fonctionnement d'un filtre à eau qui n'est pas susceptible d'être rincé, selon l'une des revendications 1 à 5, caractérisé en ce que l'insert filtrant complet est démonté après quelques mois de fonctionnement, et jeté conjointement avec un gâteau de filtre qui s'est éventuellement formé.
